(19) Europäisches Patentamt
European Patent Office
Office européen des brevets

(11) **EP 2 487 216 B1**

(12) **FASCICULE DE BREVET EUROPEEN**

(45) Date de publication et mention
de la délivrance du brevet:
**25.11.2015 Bulletin 2015/48**

(51) Int Cl.:
*C09K 3/30* *(2006.01)*    *C09K 5/04* *(2006.01)*
*C08J 9/14* *(2006.01)*    *C11D 7/28* *(2006.01)*
*C11D 7/50* *(2006.01)*

(21) Numéro de dépôt: **11185765.2**

(22) Date de dépôt: **19.10.2011**

(54) **COMPOSITIONS BINAIRES DE 2,3,3,3-TÉTRAFLUOROPROPÈNE ET D'AMMONIAC**

BINÄRE ZUSAMMENSETZUNGEN VON 2,3,3,3-TETRAFLUORPROPEN UND AMMONIAK

BINARY COMPOSITIONS OF 2,3,3,3-TETRAFLUOROPROPENE AND AMMONIA

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.02.2011 FR 1151077**

(43) Date de publication de la demande:
**15.08.2012 Bulletin 2012/33**

(73) Titulaire: **Arkema France
92700 Colombes (FR)**

(72) Inventeurs:
• **Rached, Wissam
69630 CHAPONOST (FR)**
• **Boutier, Jean-Christophe
69600 OULLINS (FR)**

(56) Documents cités:
**WO-A2-2007/126414    US-A1- 2006 243 945**

**Description**

DOMAINE DE L'INVENTION

La présente invention concerne des compositions binaires de 2,3,3,3-tétrafluoropropène, et leur utilisation, notamment en tant que fluides de transfert de chaleur.

ARRIERE-PLAN TECHNIQUE

Les fluides à base de composés fluorocarbonés sont largement utilisés dans les systèmes de transfert de chaleur par compression de vapeur, notamment les dispositifs de climatisation, de pompe à chaleur, de réfrigération ou de congélation. Ces dispositifs ont en commun de reposer sur un cycle thermodynamique comprenant la vaporisation du fluide à basse pression (dans laquelle le fluide absorbe de la chaleur) ; la compression du fluide vaporisé jusqu'à une pression élevée ; la condensation du fluide vaporisé en liquide à pression élevée (dans laquelle le fluide rejette de la chaleur) ; et la détente du fluide pour terminer le cycle

Le choix d'un fluide de transfert de chaleur (qui peut être un composé pur ou un mélange de composés) est dicté d'une part par les propriétés thermodynamiques du fluide, et d'autre part par des contraintes supplémentaires. Ainsi, un critère particulièrement important est celui de l'impact du fluide considéré sur l'environnement. En particulier, les composés chlorés (chlorofluorocarbures et hydrochlorofluorocarbures) présentent le désavantage d'endommager la couche d'ozone. On leur préfère donc désormais généralement les composés non chlorés tels que les hydrofluorocarbures, les fluoroéthers et les fluorooléfines.

Il est toutefois nécessaire de mettre au point d'autres fluides de transfert de chaleur présentant un potentiel de réchauffement global (GWP) inférieur à celui des fluides de transfert de chaleur actuellement utilisés, et présentant des performances équivalentes ou améliorées.

L'utilisation de l'ammoniac en tant que fluide de transfert de chaleur est connue. Toutefois un certain nombre de problèmes sont associés à ce composé : une température de sortie de compresseur très élevée par rapport aux hydrofluorocarbures , une absence de retour d'huile et l'obligation d'installer un séparateur d'huile ; une charge totale autorisée parfois limitée en raison de la toxicité du produit.

Le document WO 2007/126414 décrit un grand nombre de mélanges de composés de transfert de chaleur, et notamment des mélanges comprenant du 2,3,3,3-tétrafluoropropène (HFO-1234yf) et de l'ammoniac. Les seules compositions spécifiquement divulguées dans ce document et comprenant ces deux composés sont des compositions quaternaires comprenant deux composés supplémentaires, à savoir le difluorométhane (HFC-32) et le pentafluoroéthane (HFC-125), ou encore le HFC-32 et le trifluoroiodométhane.

Le document WO 2008/009928 décrit des compositions de transfert de chaleur à base de pentafluoropropène, de tétrafluoropropène et d'au moins un composé supplémentaire, pouvant être l'ammoniac.

Le document WO 2008/009922 décrit des compositions de transfert de chaleur à base de 1,2,3,3,3-pentafluoropropène (HFO-1225ye), et pouvant comprendre dans certains modes de réalisation du HFO-1234yf ou de l'ammoniac.

Le document US 2006/0243945 décrit un grand nombre de mélanges de composés de transfert de chaleur, et notamment des mélanges comprenant du HFO-1234yf et au moins un autre composé choisi parmi une liste de composés comprenant l'ammoniac. Les seules compositions spécifiquement divulguées dans ce document et comprenant ces deux composés sont des compositions quaternaires comprenant deux composés supplémentaires, à savoir le HFC-32 et le trifluoroiodométhane.

Toutefois, il existe encore un besoin de mettre au point d'autres fluides de transfert de chaleur présentant un GWP relativement faible, et susceptibles de remplacer les fluides de transfert de chaleur usuels.

En particulier, il est souhaitable de mettre au point d'autres fluides de transfert de chaleur à bas GWP qui soient quasi-azéotropiques voire azéotropiques et / ou qui présentent de bonnes performances énergétiques par rapport à des fluides de transfert de chaleur usuels (tel que le R404A ou le R410A).

RESUME DE L'INVENTION

L'invention concerne en premier lieu une composition binaire de 2,3,3,3-tétrafluoropropène et d'ammoniac.

Selon un mode de réalisation, la composition comprend :

- de 1 à 60 % d'ammoniac et de 40 à 99 % de 2,3,3,3-tétrafluoropropène ;
- de préférence de 5 à 45 % d'ammoniac et de 55 à 95 % de 2,3,3,3-tétrafluoropropène ;
- de préférence de 15 à 30 % d'ammoniac et de 70 à 85 % de 2,3,3,3-tétrafluoropropène ;
- de préférence de 18 à 26 % d'ammoniac et de 74 à 82 % de 2,3,3,3-tétrafluoropropène ;
- de préférence de 21 à 23 % d'ammoniac et de 77 à 79 % de 2,3,3,3-tétrafluoropropène.

L'invention concerne également l'utilisation de la composition ci-dessus en tant que fluide de transfert de chaleur.

Selon un mode de réalisation, la composition est quasi-azéotropique, de préférence est azéotropique.

L'invention concerne également une composition de transfert de chaleur, comprenant la composition ci-dessus ainsi qu'un ou plusieurs additifs choisis parmi les lubrifiants, les stabilisants, les tensioactifs, les agents traceurs, les agents fluorescents, les agents odorants, les agents de solubilisation et leurs mélanges.

L'invention concerne également une installation de transfert de chaleur comprenant un circuit de compression de vapeur contenant la composition ci-dessus en tant que fluide de transfert de chaleur ou contenant la composition de transfert de chaleur ci-dessus.

Selon un mode de réalisation, l'installation est choisie parmi les installations mobiles ou stationnaires de chauffage par pompe à chaleur, de climatisation, de réfrigération, de congélation et les cycles de Rankine, et notamment parmi les installations de climatisation automobile.

L'invention concerne également un procédé de chauffage ou de refroidissement d'un fluide ou d'un corps au moyen d'un circuit de compression de vapeur contenant un fluide de transfert de chaleur, ledit procédé comprenant successivement l'évaporation du fluide de transfert de chaleur, la compression du fluide de transfert de chaleur, la condensation du fluide de chaleur et la détente du fluide de transfert de chaleur, dans lequel le fluide de transfert de chaleur est la composition ci-dessus.

Selon un mode de réalisation, il s'agit d'un procédé de refroidissement d'un fluide ou d'un corps, dans lequel la température du fluide ou du corps refroidi est de -15 °C à 15 °C, et de préférence de -10 °C à 10 °C, de manière plus particulièrement préférée de -5°C à 5°C ; ou d'un procédé de chauffage d'un fluide ou d'un corps, dans lequel la température du fluide ou du corps chauffé est de 30 °C à 90 °C, et de préférence de 35 °C à 60 °C, de manière plus particulièrement préférée de 40 °C à 50 °C.

Selon un mode de réalisation, il s'agit d'un procédé de refroidissement d'un fluide ou d'un corps, dans lequel la température du fluide ou du corps refroidi est de -40°C à -10°C, et de préférence de -35°C à -25 °C, de manière plus particulièrement préférée de -30°C à -20°C.

Selon un mode de réalisation, il s'agit d'un procédé de chauffage d'un fluide ou d'un corps, dans lequel la température du fluide ou du corps chauffé est supérieure à 90°C, de préférence supérieure ou égale à 100°C ou supérieure ou égale à 110°C, et de préférence inférieure ou égale à 120°C.

L'invention concerne également un procédé de réduction de l'impact environnemental d'une installation de transfert de chaleur comprenant un circuit de compression de vapeur contenant un fluide de transfert de chaleur initial, ledit procédé comprenant une étape de remplacement du fluide de transfert de chaleur initial dans le circuit de compression de vapeur par un fluide de transfert final, le fluide de transfert final présentant un GWP inférieur au fluide de transfert de chaleur initial, dans lequel le fluide de transfert de chaleur final est une composition telle que décrite ci-dessus.

L'invention concerne également l'utilisation de la composition ci-dessus, en tant que solvant.

L'invention concerne également l'utilisation de la composition ci-dessus, en tant qu'agent d'expansion.

L'invention concerne également l'utilisation de la composition ci-dessus, en tant qu'agent de propulsion, de préférence pour un aérosol.

L'invention concerne également l'utilisation de la composition ci-dessus, en tant qu'agent de nettoyage.

La présente invention permet de répondre aux besoins ressentis dans l'état de la technique. Elle fournit plus particulièrement de nouvelles compositions à bas GWP susceptibles d'être utilisées (entre autres) en tant que fluides de transfert de chaleur, notamment en remplacement des fluides de transfert de chaleur usuels.

En particulier, l'invention fournit des compositions azéotropiques ou quasi-azéotropiques.

Dans certains modes de réalisation, l'invention fournit des fluides de transfert de chaleur qui présentent de bonnes performances énergétiques par rapport à des fluides de transfert de chaleur usuels, en particulier le R404A et le R410A.

Dans certains modes de réalisation, les compositions selon l'invention présentent notamment une capacité volumétrique améliorée et / ou un coefficient de performance amélioré par rapport aux compositions de l'état de la technique.

Enfin, l'invention permet de surmonter partiellement ou totalement les problèmes traditionnellement associés à l'ammoniac et listés ci-dessus.

BREVE DESCRIPTION DES FIGURES

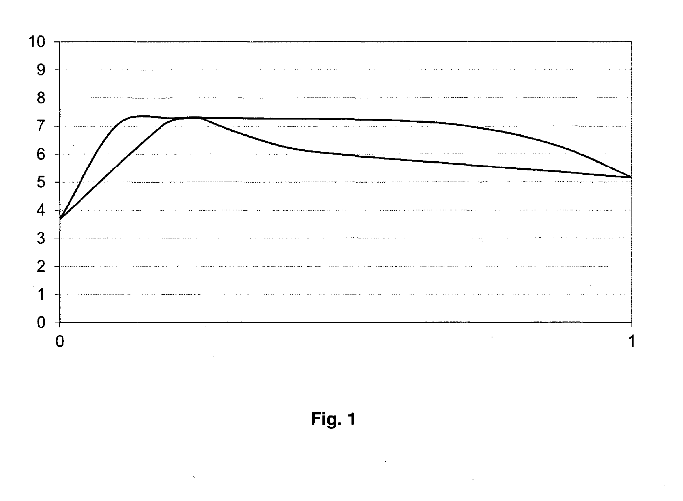

La **figure 1** représente les données d'équilibre vapeur / liquide à 5°C de mélanges binaires de HFO-1234yf et de NH$_3$, mettant en évidence l'existence d'un azéotrope et de quasi-azéotropes. La proportion de NH$_3$ entre 0 et 1 (=100%) est représentée en abscisse, et la pression en bar est représentée en ordonnée.

3

DESCRIPTION DE MODES DE REALISATION DE L'INVENTION

L'invention est maintenant décrite plus en détail et de façon non limitative dans la description qui suit.

Le R404A désigne un mélange de 52 % de 1,1,1-trifluoroéthane, de 44 % de pentafluoroéthane et de 4 % de 1,1,1,2-tétrafluoroéthane ; et le R410A désigne un mélange de 50 % de difluorométhane et 50 % de pentafluoroéthane.

Sauf mention contraire, dans l'ensemble de la demande les proportions de composés indiquées sont données en pourcentages massiques.

Selon la présente demande, le potentiel de réchauffement global (GWP) est défini par rapport au dioxyde de carbone et par rapport à une durée de 100 ans, selon la méthode indiquée dans « The scientific assessment of ozone depletion, 2002, a report of the World Meteorological Association's Global Ozone Research and Monitoring Project ».

Par « *composé de transfert de chaleur* », respectivement « *fluide de transfert de chaleur* » (ou fluide frigorigène), on entend un composé, respectivement un fluide, susceptible d'absorber de la chaleur en s'évaporant à basse température et basse pression et de rejeter de la chaleur en se condensant à haute température et haute pression, dans un circuit de compression de vapeur. De manière générale, un fluide de transfert de chaleur peut comprendre un seul, deux, trois ou plus de trois composés de transfert de chaleur.

Par « *composition de transfert de chaleur* » on entend une composition comprenant un fluide de transfert de chaleur et éventuellement un ou plusieurs additifs qui ne sont pas des composés de transfert de chaleur pour l'application envisagée.

Les additifs peuvent notamment être choisis parmi les lubrifiants, les stabilisants, les tensioactifs, les agents traceurs, les agents fluorescents, les agents odorants et les agents de solubilisation.

Le ou les stabilisants, lorsqu'ils sont présents, représentent de préférence au plus 5 % en masse dans la composition de transfert de chaleur. Parmi les stabilisants, on peut citer notamment le nitrométhane, l'acide ascorbique, l'acide téréphtalique, les azoles tels que le tolutriazole ou le benzotriazole, les composés phénoliques tels que le tocophérol, l'hydroquinone, le t-butyl hydroquinone, le 2,6-di-ter-butyl-4-méthylphénol, les époxydes (alkyl éventuellement fluoré ou perfluoré ou alkényl ou aromatique) tels que les n-butylglycidyl éther, hexanedioldiglycidyl éther, allylglycidyl éther, butylphénylglycidyl éther, les phosphites, les phosphonates, les thiols et les lactones.

A titre de lubrifiants on peut notamment utiliser des huiles d'origine minérale, des huiles de silicone, des paraffines d'origine naturelle, des naphtènes, des paraffines synthétiques, des alkylbenzènes, des poly-alpha oléfines, des polyalkène glycols, des polyol esters et / ou des polyvinyléthers.

A titre d'agents traceurs (susceptibles d'être détectés) on peut citer les hydrofluorocarbures deutérés ou non, les hydrocarbures deutérés, les perfluorocarbures, les fluoroéthers, les composés bromés, les composés iodés, les alcools, les aldéhydes, les cétones, le protoxyde d'azote et les combinaisons de ceux-ci. L'agent traceur est différent du ou des composés de transfert de chaleur composant le fluide de transfert de chaleur.

A titre d'agents de solubilisation, on peut citer les hydrocarbures, le diméthyléther, les polyoxyalkylène éthers, les amides, les cétones, les nitriles, les chlorocarbures, les esters, les lactones, les aryl éthers, les fluoroéthers et les 1,1,1-trifluoroalcanes. L'agent de solubilisation est différent du ou des composés de transfert de chaleur composant le fluide de transfert de chaleur.

A titre d'agents fluorescents, on peut citer les naphthalimides, les perylènes, les coumarines, les anthracènes, les phénanthracènes, les xanthènes, les thioxanthènes, les naphthoxanhtènes, les fluorescéines et les dérivés et combinaisons de ceux-ci.

A titre d'agents odorants, on peut citer les alkylacrylates, les allylacrylates, les acides acryliques, les acrylesters, les alkyléthers, les alkylesters, les alcynes, les aldéhydes, les thiols, les thioéthers, les disulfures, les allylisothiocyanates, les acides alcanoïques, les amines, les norbornènes, les dérivés de norbornènes, le cyclohexène, les composés aromatiques hétérocycliques, l'ascaridole, l'o-méthoxy(méthyl)-phénol et les combinaisons de ceux-ci.

Le procédé de transfert de chaleur selon l'invention repose sur l'utilisation d'une installation comprenant un circuit de compression de vapeur qui contient un fluide de transfert de chaleur. Le procédé de transfert de chaleur peut être un procédé de chauffage ou de refroidissement d'un fluide ou d'un corps.

Le circuit de compression de vapeur contenant un fluide de transfert de chaleur comprend au moins un évaporateur, un compresseur, un condenseur et un détendeur, ainsi que des lignes de transport de fluide de transfert de chaleur entre ces éléments. L'évaporateur et le condenseur comprennent un échangeur de chaleur permettant un échange de chaleur entre le fluide de transfert de chaleur et un autre fluide ou corps.

A titre de compresseur, on peut utiliser notamment un compresseur centrifuge à un ou plusieurs étages ou un mini-compresseur centrifuge. Les compresseurs rotatifs, à piston ou à vis peuvent aussi être utilisés. Le compresseur peut être entraîné par un moteur électrique ou par une turbine à gaz (par exemple alimentée par les gaz d'échappement d'un véhicule, pour les applications mobiles) ou par engrenage.

L'installation peut comprendre une turbine pour générer de l'électricité (cycle de Rankine).

L'installation peut également éventuellement comprendre au moins un circuit de fluide caloporteur utilisé pour transmettre la chaleur (avec ou sans changement d'état) entre le circuit de fluide de transfert de chaleur et le fluide ou corps à chauffer ou refroidir.

L'installation peut également éventuellement comprendre deux circuits de compression de vapeur (ou plus), contenant des fluides de transfert de chaleur identiques ou distincts. Par exemple, les circuits de compression de vapeur peuvent être couplés entre eux.

Le circuit de compression de vapeur fonctionne selon un cycle classique de compression de vapeur. Le cycle comprend le changement d'état du fluide de transfert de chaleur d'une phase liquide (ou diphasique liquide / vapeur) vers une phase vapeur à une pression relativement faible, puis la compression du fluide en phase vapeur jusqu'à une pression relativement élevée, le changement d'état (condensation) du fluide de transfert de chaleur de la phase vapeur vers la phase liquide à une pression relativement élevée, et la réduction de la pression pour recommencer le cycle.

Dans le cas d'un procédé de refroidissement, de la chaleur issue du fluide ou du corps que l'on refroidit (directement ou indirectement, via un fluide caloporteur) est absorbée par le fluide de transfert de chaleur, lors de l'évaporation de ce dernier, et ce à une température relativement faible par rapport à l'environnement. Les procédés de refroidissement comprennent les procédés de climatisation (avec des installations mobiles, par exemple dans des véhicules, ou stationnaires), de réfrigération et de congélation ou de cryogénie.

Dans le cas d'un procédé de chauffage, de la chaleur est cédée (directement ou indirectement, via un fluide caloporteur) du fluide de transfert de chaleur, lors de la condensation de celui-ci, au fluide ou au corps que l'on chauffe, et ce à une température relativement élevée par rapport à l'environnement. L'installation permettant de mettre en oeuvre le transfert de chaleur est appelée dans ce cas « *pompe à chaleur* ».

Il est possible d'utiliser tout type d'échangeur de chaleur pour la mise en oeuvre des fluides de transfert de chaleur selon l'invention, et notamment des échangeurs de chaleur à co-courant ou, de préférence, des échangeurs de chaleur à contre-courant.

Les fluides de transfert de chaleur utilisés dans le cadre de la présente invention sont des compositions binaires de HFO-1234yf et de $NH_3$.

Par composition binaire, on entend soit une composition consistant en HFO-1234yf et $NH_3$ ; soit une composition consistant essentiellement en HFO-1234yf et $NH_3$, mais pouvant contenir des impuretés à raison de moins de 1 %, de préférence moins de 0,5 %, de préférence moins de 0,1 %, de préférence moins de 0,05 % et de préférence moins de 0,01 %.

Selon des modes de réalisation particuliers, la proportion de HFO-1234yf dans le fluide de transfert de chaleur peut être : de 0,1 à 5 % ; ou de 5 à 10 % ; ou de 10 à 15 % ou de 15 à 20 % ; ou de 20 à 25 % ; ou de 25 à 30 % ; ou de 30 à 35 % ; ou de 35 à 40 % ; ou de 40 à 45 % ; ou de 45 à 50% ; ou de 50 à 55 % ; ou de 55 à 60 % ; ou de 60 à 65 % ; ou de 65 à 70 % ; ou de 70 à 75 % ; ou de 75 à 80 % ; ou de 80 à 85 % ; ou de 85 à 90 % ; ou de 90 à 95 % ; ou de 95 à 99,9 %.

Selon des modes de réalisation particuliers, la proportion de $NH_3$ dans le fluide de transfert de chaleur peut être : de 0,1 à 5 % ; ou de 5 à 10 % ; ou de 10 à 15 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 % ; ou de 70 à 75 % ; ou de 75 à 80 % ; ou de 80 à 85 % ; ou de 85 à 90 % ; ou de 90 à 95 % ; ou de 95 à 99,9 %.

Il peut être préférable de ne pas avoir une proportion de $NH_3$ trop élevée dans le mélange, dans le cadre d'une utilisation en tant que fluide de transfert de chaleur, afin d'éviter une hausse de température trop forte à la sortie du compresseur.

Parmi les compositions ci-dessus, certaines présentent l'avantage d'être azéotropiques ou quasi-azéotropiques. Par exemple, l'azéotrope pour le mélange binaire HFO-1234yf / $NH_3$ est obtenu pour une proportion de $NH_3$ d'environ 23 % ($\pm$ 2 %), à une température de 5°C ($\pm$ 1 °C) et à une pression de 7,3 bar ($\pm$ 1 bar).

On désigne par « *quasi-azéotropiques* » les compositions pour lesquelles, à température constante, la pression de saturation liquide et la pression de saturation vapeur sont quasiment identiques (la différence maximale de pression étant de 10 %, voire avantageusement de 5 %, par rapport à la pression de saturation liquide)

Pour des compositions « *azéotropiques* », à température constante, la différence maximale de pression est voisine de 0 %.

Ces fluides de transfert de chaleur présentent un avantage de facilité de mise en oeuvre. En l'absence de glissement de température significatif, il n'y a pas de changement significatif de la composition circulante, et pas non plus de changement significatif de la composition en cas de fuite.

En outre, on a trouvé que certaines compositions selon l'invention présentent des performances améliorées par rapport au R404A et / ou au R410A, en particulier pour les procédés de refroidissement à température modérée, c'est-à-dire ceux dans lesquels la température du fluide ou du corps refroidi est de -15°C à 15°C, de préférence de -10°C à 10°C, de manière plus particulièrement préférée de -5°C à 5°C (idéalement d'environ 0°C). A cet égard, les compositions pour lesquelles la proportion de $NH_3$ est supérieure ou égale à 15 % sont particulièrement préférées, notamment les compositions ayant une proportion de $NH_3$ de 15 à 30 %, de préférence de 18 à 26 %.

On a également trouvé que certaines compositions selon l'invention présentent des performances améliorées par rapport au R410A, en particulier pour les procédés de chauffage à température modérée, c'est-à-dire ceux dans lesquels la température du fluide ou du corps chauffé est de 30°C à 80°C, et de préférence de 35°C à 55°C, de manière plus particulièrement préférée de 40°C à 50°C (idéalement d'environ 45 °C). A cet égard, les compositions pour lesquelles la proportion de $NH_3$ est supérieure ou égale à 15 % sont particulièrement préférées, notamment les compositions ayant une proportion de $NH_3$ de 20 à 30 %.

Dans les procédés de *« refroidissement ou de chauffage à température modérée »* mentionnés ci-dessus, la température d'entrée du fluide de transfert de chaleur à l'évaporateur est de préférence de -20°C à 10°C, notamment de -15°C à 5°C, de manière plus particulièrement préférée de -10°C à 0°C et par exemple d'environ -5°C ; et la température du début de la condensation du fluide de transfert de chaleur au condenseur est de préférence de 25°C à 90°C, notamment de 30°C à 70°C, de manière plus particulièrement préférée de 35°C à 55°C et par exemple d'environ 50°C. Ces procédés peuvent être des procédés de réfrigération, de climatisation ou de chauffage.

Certaines compositions sont également appropriées pour les procédés de chauffage à haute température, c'est-à-dire ceux dans lesquels la température du fluide ou du corps chauffé est supérieure à 90°C, par exemple supérieure ou égale à 100°C ou supérieure ou égale à 110°C, et de préférence inférieure ou égale à 120°C.

On a également trouvé que certaines compositions selon l'invention présentent des performances améliorées par rapport au R404A, en particulier pour les procédés de réfrigération à basse température, c'est-à-dire ceux dans lesquels la température du fluide ou du corps refroidi est de -40°C à -10°C, et de préférence de -35°C à -25°C, de manière plus particulièrement préférée de -30°C à -20°C (idéalement d'environ -25°C). A cet égard, les compositions pour lesquelles la proportion de $NH_3$ est supérieure ou égale à 15 % sont particulièrement préférées, notamment les compositions ayant une proportion de $NH_3$ de 18 à 24 %.

Dans les procédés de « *réfrigération à basse température* » mentionnés ci-dessus, la température d'entrée du fluide de transfert de chaleur à l'évaporateur est de préférence de -45°C à -15°C, notamment de -40°C à -20°C, de manière plus particulièrement préférée de -35°C à -25°C et par exemple d'environ -30°C ; et la température du début de la condensation du fluide de transfert de chaleur au condenseur est de préférence de 25°C à 80°C, notamment de 30°C à 60°C, de manière plus particulièrement préférée de 35°C à 55°C et par exemple d'environ 40 °C.

Plus généralement, les compositions selon l'invention peuvent servir à remplacer tout fluide de transfert de chaleur dans toutes les applications de transfert de chaleur, et par exemple dans la climatisation automobile. Par exemple, les compositions selon l'invention peuvent servir à remplacer :

- le 1,1,1,2-tétrafluoroéthane (R134a) ;
- le 1,1-difluoroéthane (R152a) ;
- le 1,1,1,3,3-pentafluoropropane (R245fa) ;
- les mélanges de pentafluoroéthane (R125), de 1,1,1,2-tétrafluoroéthane (R134a) et d'isobutane (R600a), à savoir les R422 ;
- le chlorodifluorométhane (R22) ;
- le mélange de 51,2 % de chloropentafluoroéthane (R115) et de 48,8 % de chlorodifluorométhane (R22), à savoir le R502 ;
- tout hydrocarbure ;
- le mélange de 20 % de difluorométhane (R32), de 40 % de pentafluoroéthane (R125) et de 40 % de 1,1,1,2-tétrafluoroéthane (R134a), à savoir le R407A ;
- le mélange de 23 % de difluorométhane (R32), de 25 % de pentafluoroéthane (R125) et de 52 % de 1,1,1,2-tétrafluoroéthane (R134a), à savoir le R407C ;
- le mélange de 30 % de difluorométhane (R32), de 30 % de pentafluoroéthane (R125) et de 40 % de 1,1,1,2-tétrafluoroéthane (R134a), à savoir le R407F;
- le R1234yf (2,3,3,3-tétrafluoropropène) ;
- le R1234ze (1,3,3,3-tétrafluoropropène).

Les compositions selon l'invention peuvent également être utiles en tant qu'agent d'expansion, agent de propulsion (par exemple pour un aérosol), agent de nettoyage ou solvant, outre leur utilisation en tant que fluides de transfert de chaleur.

En tant qu'agent de propulsion, les compositions selon l'invention peuvent être utilisées seules ou en combinaison avec des agents de propulsion connus. L'agent de propulsion comprend, de préférence consiste en, une composition selon l'invention. La substance active devant être projetée peut être mélangée avec l'agent de propulsion et des composés inertes, des solvants ou autres additifs, pour former une composition à projeter. De préférence, la composition à projeter est un aérosol.

En tant qu'agent d'expansion, les compositions selon l'invention peuvent être comprises dans une composition d'expansion, qui comprend de préférence un ou plusieurs autres composés susceptibles de réagir et de former une mousse ou structure cellulaire dans des conditions appropriées, comme cela est connu de l'homme du métier.

En particulier, l'invention propose un procédé de préparation d'un produit thermoplastique expansé comprenant d'abord la préparation d'une composition polymérique d'expansion. Typiquement, la composition polymérique d'expansion est préparée en plastifiant une résine polymère et en mélangeant les composés d'une composition d'agent d'expansion à une pression initiale. La plastification de la résine polymère peut être effectuée sous l'effet de la chaleur, en chauffant la résine polymère pour la ramollir suffisamment pour mélanger une composition d'agent d'expansion. Généralement, la température de plastification est proche de la température de transition vitreuse ou de la température de fusion pour les polymères cristallins.

D'autres utilisations des compositions selon l'invention comprennent les utilisations en tant que solvants, agents de nettoyage ou autres. On peut citer par exemple le dégraissage par la vapeur, le nettoyage de précision, le nettoyage de circuits électroniques, le nettoyage à sec, le nettoyage abrasif, les solvants pour le dépôt de lubrifiants et d'agents de libération, et d'autres traitements de solvant ou de surface.

### EXEMPLES

Les exemples suivants illustrent l'invention sans la limiter.

### Exemple 1 - compositions azéotropiques ou quasi-azéotropiques

Une cellule sous vide équipée d'un tube saphir est refroidie à 5°C avec un bain d'huile. Une fois l'équilibre thermique atteint, la cellule est chargée de HFO-1234yf, et la pression à laquelle l'équilibre est atteint est enregistrée. Une quantité de $NH_3$ est introduite dans la cellule, et le contenu est mélangé afin d'accélérer la mise à l'équilibre. A l'équilibre, une quantité minimale d'échantillon est prélevée de la phase gazeuse et de la phase liquide pour une analyse par chromatographie en phase gazeuse avec un détecteur thermique.

Les données d'équilibre obtenues avec différentes compositions de HFO-1234yf et de $NH_3$ sont représentées sur la **figure 1**.

### Exemple 2 - étude des performances

L'équation RK-Soave est utilisée pour le calcul des densités, enthalpies, entropies et les données d'équilibre liquide vapeur des mélanges. L'utilisation de cette équation nécessite la connaissance des propriétés des corps purs utilisés dans les mélanges en question et aussi les coefficients d'interaction pour chaque binaire.

Les données disponibles pour chaque corps pur sont la température d'ébullition, la température critique et la pression critique, la courbe de pression en fonction de la température à partir du point d'ébullition jusqu'au point critique, les densités de liquide saturé et de vapeur saturée en fonction de la température.

Les données sur l'ammoniac sont publiées dans l'ASHRAE Handbook 2005 chapitre 20 et sont aussi disponible sous Refrop (Logiciel développé par NIST pour le calcul des propriétés des fluides frigorigènes).

Les données de la courbe température-pression du HFO-1234yf sont mesurées par la méthode statique. La température critique et la pression critique sont mesurées par un calorimètre C80 commercialisé par Setaram.

L'équation RK-Soave utilise des coefficients d'interaction binaire pour représenter le comportement des produits en mélanges. Les coefficients sont calculés en fonction des données expérimentales d'équilibre liquide vapeur.

Pour l'évaluation des performances énergétiques, on considère un système à compression équipé d'un évaporateur, d'un condenseur, d'un compresseur et d'un détendeur.

Le coefficient de performance (COP) est défini comme étant la puissance utile fournie par le système sur la puissance apportée ou consommée par le système.

Le coefficient de performance de Lorenz (COPLorenz) est un coefficient de performance de référence. Il est fonction de températures et est utilisé pour comparer les COP des différents fluides.

Le coefficient de performance de Lorenz est défini comme suit (les températures T sont en K) :

$$T_{moyenne}^{condenseur} = T_{entrée}^{condenseur} - T_{sortie}^{condenseur}$$

$$T_{moyenne}^{évaporateur} = T_{sortie}^{évaporateur} - T_{entrée}^{évaporateur}$$

Le COP de Lorenz dans le cas de l'air conditionné et de la réfrigération est :

$$COPlorenz = \frac{T^{\text{évaporateur}}_{\text{moyenne}}}{T^{\text{condenseur}}_{\text{moyenne}} - T^{\text{évaporateur}}_{\text{moyenne}}}$$

Le COP de Lorenz dans le cas du chauffage est :

$$COPlorenz = \frac{T^{\text{condenseur}}_{\text{moyenne}}}{T^{\text{condenseur}}_{\text{moyenne}} - T^{\text{évaporateur}}_{\text{moyenne}}}$$

Pour chaque composition, le coefficient de performance du cycle de Lorenz est calculé en fonction des températures correspondantes.

Dans les tableaux qui suivent, « T » désigne la température, « P » désigne la pression, « % CAP » désigne la capacité volumétrique du fluide par rapport au fluide de référence indiqué en première ligne, « %COP/COPLorenz » désigne le rapport du COP du système par rapport au COP du cycle de Lorenz correspondant et « glide » désigne la variation de température au cours de l'évaporateur à pression constante.

Pour l'évaluation des performances énergétiques de la pompe à chaleur, on considère un système à compression équipé d'un évaporateur, condenseur et échangeur interne, d'un compresseur à vis et d'un détendeur.

Le système fonctionne avec 5°C de surchauffe. La température d'évaporation est de -5°C et la température de condensation est de 50°C.

Les résultats obtenus sont rassemblés dans le tableau 1 ci-dessous.

| HFO-1234yf % | NH₃ % | T entrée évaporateur (°C) | T sortie compresseur (°C) | T entrée détendeur (°C) | P évaporateur (bar) | P condenseur (bar) | Taux de compression (p/p) | Glide (évaporateur) | Rendement compresseur | % CAP | %COP / COPLorenz | P saturante liquide | P saturante vapeur | Différence P (%) |
|---|---|---|---|---|---|---|---|---|---|---|---|---|---|---|
| R410A | | -5 | 91 | 48,0 | 6,8 | 30,7 | 4,5 | 0,07 | 79,4 | 100 | 58 | 6,8 | 6,8 | 0 |
| 85 | 15 | -7 | 100 | 48,3 | 4,7 | 26,5 | 5,6 | 1,82 | 74,8 | 81 | 59 | 4,7 | 4,4 | 7 |
| 82 | 18 | -6 | 102 | 48,3 | 4,9 | 26,9 | 5,4 | 0,76 | 75,7 | 88 | 60 | 4,9 | 4,8 | 3 |
| 81 | 19 | -5 | 102 | 48,3 | 5,0 | 27,0 | 5,4 | 0,49 | 75,9 | 90 | 60 | 5,0 | 4,9 | 2 |
| 80 | 20 | -5 | 103 | 48,3 | 5,0 | 27,1 | 5,4 | 0,27 | 76,1 | 91 | 60 | 5,0 | 5,0 | 1 |
| 79 | 21 | -5 | 104 | 48,3 | 5,1 | 27,1 | 5,3 | 0,11 | 76,2 | 93 | 61 | 5,1 | 5,1 | 0 |
| 78 | 22 | -5 | 105 | 48,3 | 5,1 | 27,2 | 5,3 | 0,02 | 76,2 | 94 | 61 | 5,1 | 5,1 | 0 |
| 77 | 23 | -5 | 107 | 48,3 | 5,1 | 27,2 | 5,3 | 0,01 | 76,2 | 95 | 61 | 5,1 | 5,1 | 0 |
| 76 | 24 | -5 | 108 | 48,3 | 5,1 | 27,2 | 5,4 | 0,14 | 76,1 | 95 | 61 | 5,1 | 5,0 | 1 |
| 75 | 25 | -5 | 111 | 48,3 | 5,0 | 27,2 | 5,4 | 0,46 | 75,8 | 95 | 61 | 5,0 | 4,9 | 2 |
| 74 | 26 | -6 | 113 | 48,3 | 4,9 | 27,3 | 5,5 | 0,79 | 75,4 | 94 | 61 | 4,9 | 4,8 | 3 |
| 70 | 30 | -7 | 123 | 48,3 | 4,7 | 27,2 | 5,8 | 2,00 | 74,1 | 92 | 60 | 4,7 | 4,4 | 8 |
| 65 | 35 | -8 | 134 | 48,3 | 4,5 | 27,2 | 6,1 | 3,25 | 72,7 | 91 | 60 | 4,5 | 3,9 | 12 |
| 60 | 40 | -9 | 145 | 48,3 | 4,3 | 27,1 | 6,3 | 4,17 | 71,4 | 90 | 60 | 4,3 | 3,7 | 16 |
| 50 | 50 | -10 | 164 | 48,2 | 4,1 | 26,9 | 6,6 | 4,82 | 69,4 | 88 | 60 | 4,2 | 3,4 | 20 |
| 40 | 60 | -9 | 181 | 48,2 | 3,9 | 26,7 | 6,8 | 4,31 | 68,0 | 87 | 59 | 4,3 | 3,3 | 23 |
| 20 | 80 | -7 | 198 | 48,1 | 3,7 | 25,1 | 6,8 | 2,27 | 68,2 | 86 | 60 | 4,3 | 3,4 | 21 |
| 10 | 90 | -6 | 193 | 48,0 | 3,6 | 23,2 | 6,4 | 1,13 | 70,6 | 86 | 62 | 4,0 | 3,5 | 14 |

### Tableau 1 – chauffage à température modérée, performances énergétiques

Pour l'évaluation des performances énergétiques de la réfrigération à température modérée, on considère un système à compression équipé d'un évaporateur, condenseur et échangeur interne, d'un compresseur à vis et d'un détendeur.

Le système fonctionne avec 5°C de surchauffe. La température d'évaporation est de -5°C et la température de condensation est de 50°C.

Les résultats obtenus sont rassemblés dans le tableau 2 ci-dessous.

| % | | T entrée évaporateur (°C) | T sortie compresseur (°C) | T entrée détendeur (°C) | P évaporateur (bar) | P condenseur (bar) | Taux de compression (p/p) | Glide (évaporateur) | Rendement compresseur | % CAP | %COP / COPLorenz | P saturante liquide | P saturante vapeur | Différence P (%) |
|---|---|---|---|---|---|---|---|---|---|---|---|---|---|---|
| R404A | | -5 | 69 | 48,1 | 5,1 | 23,1 | 4,5 | 0,35 | 79,4 | 100 | 47 | 5,1 | 5,0 | 2 |
| R410A | | -5 | 91 | 48,0 | 6,8 | 30,7 | 4,5 | 0,07 | 79,4 | 151 | 50 | 6,8 | 6,8 | 0 |
| HFO-1234yf | NH₃ | | | | | | | | | | | | | |
| 85 | 15 | -7 | 100 | 48,3 | 4,7 | 26,5 | 5,6 | 1,82 | 74,8 | 122 | 50 | 4,7 | 4,4 | 7 |
| 82 | 18 | -6 | 102 | 48,3 | 4,9 | 26,9 | 5,4 | 0,76 | 75,7 | 132 | 51 | 4,9 | 4,8 | 3 |
| 81 | 19 | -5 | 102 | 48,3 | 5,0 | 27,0 | 5,4 | 0,49 | 75,9 | 135 | 52 | 5,0 | 4,9 | 2 |
| 80 | 20 | -5 | 103 | 48,3 | 5,0 | 27,1 | 5,4 | 0,27 | 76,1 | 138 | 52 | 5,0 | 5,0 | 1 |
| 79 | 21 | -5 | 104 | 48,3 | 5,1 | 27,1 | 5,3 | 0,11 | 76,2 | 140 | 53 | 5,1 | 5,1 | 0 |
| 78 | 22 | -5 | 105 | 48,3 | 5,1 | 27,2 | 5,3 | 0,02 | 76,2 | 142 | 53 | 5,1 | 5,1 | 0 |
| 77 | 23 | -5 | 107 | 48,3 | 5,1 | 27,2 | 5,3 | 0,01 | 76,2 | 143 | 53 | 5,1 | 5,1 | 0 |
| 76 | 24 | -5 | 108 | 48,3 | 5,1 | 27,2 | 5,4 | 0,14 | 76,1 | 144 | 53 | 5,1 | 5,0 | 1 |
| 75 | 25 | -5 | 111 | 48,3 | 5,0 | 27,2 | 5,4 | 0,46 | 75,8 | 143 | 53 | 5,0 | 4,9 | 2 |
| 74 | 26 | -6 | 113 | 48,3 | 4,9 | 27,3 | 5,5 | 0,79 | 75,4 | 142 | 52 | 4,9 | 4,8 | 3 |
| 70 | 30 | -7 | 123 | 48,3 | 4,7 | 27,2 | 5,8 | 2,00 | 74,1 | 140 | 52 | 4,7 | 4,4 | 8 |
| 65 | 35 | -8 | 134 | 48,3 | 4,5 | 27,2 | 6,1 | 3,25 | 72,7 | 137 | 51 | 4,5 | 3,9 | 12 |
| 60 | 40 | -9 | 145 | 48,3 | 4,3 | 27,1 | 6,3 | 4,17 | 71,4 | 135 | 51 | 4,3 | 3,7 | 16 |
| 50 | 50 | -10 | 164 | 48,2 | 4,1 | 26,9 | 6,6 | 4,82 | 69,4 | 133 | 51 | 4,2 | 3,4 | 20 |
| 40 | 60 | -9 | 181 | 48,2 | 3,9 | 26,7 | 6,8 | 4,31 | 68,0 | 132 | 50 | 4,3 | 3,3 | 23 |
| 20 | 80 | -7 | 198 | 48,1 | 3,7 | 25,1 | 6,8 | 2,27 | 68,2 | 131 | 51 | 4,3 | 3,4 | 21 |
| 10 | 90 | -6 | 193 | 48,0 | 3,6 | 23,2 | 6,4 | 1,13 | 70,6 | 130 | 53 | 4,0 | 3,5 | 14 |

## Tableau 2 – réfrigération à température modérée, performances énergétiques

Pour l'évaluation des performances énergétiques dans un procédé de réfrigération à basse température, on considère un système à compression équipé d'un évaporateur, condenseur et échangeur interne, d'un détendeur et d'un compresseur à rendement isentropique de 60%.

Le système fonctionne avec 15°C de surchauffe. La température d'évaporation est de -30°C et la température de condensation est de 40 °C.

Les résultats obtenus sont rassemblés dans le tableau 3 ci-dessous.

| % | | T entrée évaporateur (°C) | T sortie compresseur (°C) | T entrée détendeur (°C) | P évaporateur (bar) | P condenseur (bar) | Taux de compression (p/p) | Glide (évaporateur) | % CAP | %COP / COPLorenz |
|---|---|---|---|---|---|---|---|---|---|---|
| R404A | | -30 | 93 | 33 | 2,0 | 18,3 | 9,0 | 0,46 | 100 | 36 |
| HFO-1234yf | NH₃ | | | | | | | | | |
| 95 | 5 | -33 | 119 | 34 | 1,2 | 17,5 | 14,2 | 3,21 | 72 | 38 |
| 90 | 10 | -33 | 134 | 34 | 1,5 | 19,6 | 13,3 | 2,94 | 90 | 38 |
| 85 | 15 | -31 | 145 | 35 | 1,7 | 20,6 | 12,3 | 1,19 | 108 | 39 |
| 82 | 18 | -30 | 152 | 35 | 1,8 | 20,8 | 11,8 | 0,30 | 116 | 40 |
| 81 | 19 | -30 | 154 | 35 | 1,8 | 20,9 | 11,8 | 0,11 | 118 | 40 |
| 80 | 20 | -30 | 156 | 35 | 1,8 | 20,9 | 11,7 | 0,01 | 120 | 40 |
| 79 | 21 | -30 | 159 | 35 | 1,8 | 21,0 | 11,8 | 0,08 | 121 | 40 |
| 78 | 22 | -30 | 163 | 35 | 1,8 | 21,0 | 12,0 | 0,38 | 120 | 40 |
| 77 | 23 | -31 | 167 | 35 | 1,7 | 21,0 | 12,2 | 0,68 | 119 | 40 |
| 76 | 24 | -31 | 171 | 35 | 1,7 | 21,0 | 12,4 | 0,98 | 118 | 40 |
| 75 | 25 | -31 | 174 | 35 | 1,7 | 21,0 | 12,5 | 1,27 | 117 | 40 |
| 74 | 26 | -32 | 178 | 35 | 1,7 | 21,0 | 12,7 | 1,54 | 117 | 40 |
| 70 | 30 | -33 | 192 | 35 | 1,6 | 21,0 | 13,3 | 2,51 | 114 | 40 |
| 65 | 35 | -33 | 208 | 35 | 1,5 | 21,0 | 13,9 | 3,41 | 112 | 41 |
| 60 | 40 | -34 | 222 | 35 | 1,4 | 20,9 | 14,5 | 3,90 | 110 | 41 |
| 50 | 50 | -34 | 249 | 35 | 1,4 | 20,8 | 15,2 | 3,93 | 108 | 41 |
| 40 | 60 | -33 | 271 | 34 | 1,3 | 20,6 | 15,8 | 3,33 | 107 | 41 |
| 30 | 70 | -33 | 290 | 34 | 1,3 | 20,3 | 15,9 | 2,51 | 106 | 41 |
| 20 | 80 | -32 | 303 | 34 | 1,2 | 19,4 | 15,6 | 1,65 | 106 | 42 |
| 10 | 90 | -31 | 307 | 34 | 1,2 | 17,9 | 14,7 | 0,81 | 105 | 42 |

## Tableau 3 – réfrigération à température modérée, performances énergétiques

**Revendications**

1. Composition binaire de 2,3,3,3-tétrafluoropropène et d'ammoniac.

2. Composition selon la revendication 1, comprenant :

   - de 1 à 60 % d'ammoniac et de 40 à 99 % de 2,3,3,3-tétrafluoropropène ;
   - de préférence de 5 à 45 % d'ammoniac et de 55 à 95 % de 2,3,3,3-tétrafluoropropène ;
   - de préférence de 15 à 30 % d'ammoniac et de 70 à 85 % de 2,3,3,3-tétrafluoropropène ;
   - de préférence de 18 à 26 % d'ammoniac et de 74 à 82 % de 2,3,3,3-tétrafluoropropène ;
   - de préférence de 21 à 23 % d'ammoniac et de 77 à 79 % de 2,3,3,3-tétrafluoropropène.

3. Utilisation de la composition selon l'une des revendications 1 ou 2, en tant que fluide de transfert de chaleur.

**4.** Utilisation selon la revendication 3, dans laquelle la composition est quasi-azéotropique, de préférence est azéotropique.

**5.** Composition de transfert de chaleur, comprenant la composition selon l'une des revendications 1 ou 2 ainsi qu'un ou plusieurs additifs choisis parmi les lubrifiants, les stabilisants, les tensioactifs, les agents traceurs, les agents fluorescents, les agents odorants, les agents de solubilisation et leurs mélanges.

**6.** Installation de transfert de chaleur comprenant un circuit de compression de vapeur contenant une composition selon l'une des revendications 1 ou 2 en tant que fluide de transfert de chaleur ou contenant une composition de transfert de chaleur selon la revendication 5.

**7.** Installation selon la revendication 6, choisie parmi les installations mobiles ou stationnaires de chauffage par pompe à chaleur, de climatisation, de réfrigération, de congélation et les cycles de Rankine, et notamment parmi les installations de climatisation automobile.

**8.** Procédé de chauffage ou de refroidissement d'un fluide ou d'un corps au moyen d'un circuit de compression de vapeur contenant un fluide de transfert de chaleur, ledit procédé comprenant successivement l'évaporation du fluide de transfert de chaleur, la compression du fluide de transfert de chaleur, la condensation du fluide de chaleur et la détente du fluide de transfert de chaleur, dans lequel le fluide de transfert de chaleur est une composition selon l'une des revendications 1 ou 2.

**9.** Procédé selon la revendication 8, qui est un procédé de refroidissement d'un fluide ou d'un corps, dans lequel la température du fluide ou du corps refroidi est de -15°C à 15°C, et de préférence de -10°C à 10°C, de manière plus particulièrement préférée de -5°C à 5°C; ou qui est un procédé de chauffage d'un fluide ou d'un corps, dans lequel la température du fluide ou du corps chauffé est de 30°C à 90°C, et de préférence de 35°C à 60°C, de manière plus particulièrement préférée de 40°C à 50°C.

**10.** Procédé selon la revendication 8, qui est un procédé de refroidissement d'un fluide ou d'un corps, dans lequel la température du fluide ou du corps refroidi est de -40°C à -10°C, et de préférence de -35°C à -25°C, de manière plus particulièrement préférée de -30 °C à -20 °C.

**11.** Procédé selon la revendication 8, qui est un procédé de chauffage d'un fluide ou d'un corps, dans lequel la température du fluide ou du corps chauffé est supérieure à 90°C, de préférence supérieure ou égale à 100 °C ou supérieure ou égale à 110°C, et de préférence inférieure ou égale à 120°C.

**12.** Procédé de réduction de l'impact environnemental d'une installation de transfert de chaleur comprenant un circuit de compression de vapeur contenant un fluide de transfert de chaleur initial, ledit procédé comprenant une étape de remplacement du fluide de transfert de chaleur initial dans le circuit de compression de vapeur par un fluide de transfert final, le fluide de transfert final présentant un GWP inférieur au fluide de transfert de chaleur initial, dans lequel le fluide de transfert de chaleur final est une composition selon l'une des revendications 1 ou 2.

**13.** Utilisation de la composition selon l'une des revendications 1 ou 2, en tant que solvant.

**14.** Utilisation de la composition selon l'une des revendications 1 ou 2, en tant qu'agent d'expansion.

**15.** Utilisation de la composition selon l'une des revendications 1 ou 2, en tant qu'agent de propulsion, de préférence pour un aérosol.

**16.** Utilisation de la composition selon l'une des revendications 1 ou 2, en tant qu'agent de nettoyage.

**Patentansprüche**

**1.** Binäre Zusammensetzung aus 2,3,3,3-Tetrafluorpropen und Ammoniak.

**2.** Zusammensetzung nach Anspruch 1, umfassend:

- 1 bis 60% Ammoniak und 40 bis 99% 2,3,3,3-Tetrafluorpropen;

- vorzugsweise 5 bis 45% Ammoniak und 55 bis 95% 2,3,3,3-Tetrafluorpropen;
- vorzugsweise 15 bis 30% Ammoniak und 70 bis 85% 2,3,3,3-Tetrafluorpropen;
- vorzugsweise 18 bis 26% Ammoniak und 74 bis 82% 2,3,3,3-Tetrafluorpropen;
- vorzugsweise 21 bis 23% Ammoniak und 77 bis 79% 2,3,3,3-Tetrafluorpropen.

3. Verwendung der Zusammensetzung nach Anspruch 1 oder 2 als Wärmeübertragungsfluid.

4. Verwendung nach Anspruch 3, wobei die Zusammensetzung quasi-azeotrop und vorzugsweise azeotrop ist.

5. Wärmeübertragungszusammensetzung, umfassend die Zusammensetzung nach Anspruch 1 oder 2 sowie ein oder mehrere Additive, die aus Schmiermitteln, Stabilisatoren, Tensiden, Tracern, Fluoreszenzmitteln, Geruchsmitteln, Solubilisatoren und Mischungen davon ausgewählt sind.

6. Wärmeübertragungsanlage, umfassend einen Dampfverdichtungskreislauf, der eine Zusammensetzung nach Anspruch 1 oder 2 als Wärmeübertragungsfluid enthält oder eine Wärmeübertragungszusammensetzung nach Anspruch 5 enthält.

7. Anlage nach Anspruch 6, ausgewählt aus mobilen oder stationären Wärmepumpenheizanlagen, Klimaanlagen, Kühlanlagen, Gefrieranlagen und Rankine-Zyklen und insbesondere aus Auto-Klimaanlagen.

8. Verfahren zum Erwärmen oder Abkühlen eines Fluids oder eines Körpers mittels eines Dampfverdichtungskreislaufs, der ein Wärmeübertragungsfluid enthält, bei dem man nacheinander das Wärmeübertragungsfluid verdampft, das Wärmeübertragungsfluid verdichtet, das Wärmefluid kondensiert und das Wärmeübertragungsfluid entspannt, wobei es sich bei dem Wärmeübertragungsfluid um eine Zusammensetzung nach Anspruch 1 oder 2 handelt.

9. Verfahren nach Anspruch 8, bei dem es sich um ein Verfahren zum Abkühlen eines Fluids oder eines Körpers handelt, bei dem die Temperatur des abgekühlten Fluids oder Körpers -15°C bis 15°C, vorzugsweise -10°C bis 10°C und weiter bevorzugt -5°C bis 5°C beträgt; oder bei dem es sich um ein Verfahren zum Erwärmen eines Fluids oder eines Körpers handelt, bei dem die Temperatur des erwärmten Fluids oder Körpers 30°C bis 90°C, vorzugsweise 35°C bis 60°C und weiter bevorzugt 40°C bis 50°C beträgt.

10. Verfahren nach Anspruch 8, bei dem es sich um ein Verfahren zum Abkühlen eines Fluids oder eines Körpers handelt, bei dem die Temperatur des abgekühlten Fluids oder Körpers -40°C bis -10°C, vorzugsweise -35°C bis -25°C und weiter bevorzugt -30°C bis -20°C beträgt.

11. Verfahren nach Anspruch 8, bei dem es sich um ein Verfahren zum Erwärmen eines Fluids oder eines Körpers handelt, bei dem die Temperatur des erwärmten Fluids oder Körpers größer als 90°C, vorzugsweise größer gleich 100°C oder größer gleich 110°C und vorzugsweise kleiner gleich 120°C ist.

12. Verfahren zur Verringerung der Umweltbelastung durch eine Wärmeübertragungsanlage mit einem Dampfverdichtungskreislauf, der ein anfängliches Wärmeübertragungsfluid enthält, bei dem man das anfängliche Wärmeübertragungsfluid in dem Dampfverdichtungskreislauf durch ein letztendliches Übertragungsfluid ersetzt, wobei das letztendliche Übertragungsfluid ein kleineres GWP als das anfängliche Wärmeübertragungsfluid aufweist, wobei es sich bei dem letztendlichen Wärmeübertragungsfluid um eine Zusammensetzung nach Anspruch 1 oder 2 handelt.

13. Verwendung der Zusammensetzung nach Anspruch 1 oder 2 als Lösungsmittel.

14. Verwendung der Zusammensetzung nach Anspruch 1 oder 2 als Blähmittel.

15. Verwendung der Zusammensetzung nach Anspruch 1 oder 2 als Treibmittel, vorzugsweise für ein Aerosol.

16. Verwendung der Zusammensetzung nach Anspruch 1 oder 2 als Reinigungsmittel.

**Claims**

1. Binary composition of 2,3,3,3-tetrafluoropropene and of ammonia.

2. Composition according to Claim 1, comprising:

- from 1 to 60% of ammonia and from 40 to 99% of 2,3,3,3-tetrafluoropropene;
- preferably from 5 to 45% of ammonia and from 55 to 95% of 2,3,3,3-tetrafluoropropene;
- preferably from 15 to 30% of ammonia and from 70 to 85% of 2,3,3,3-tetrafluoropropene;
- preferably from 18 to 26% of ammonia and from 74 to 82% of 2,3,3,3-tetrafluoropropene;
- preferably from 21 to 23% of ammonia and from 77 to 79% of 2,3,3,3-tetrafluoropropene.

3. Use of the composition according to either of Claims 1 and 2, as a heat transfer fluid.

4. Use according to Claim 3, in which the composition is quasi-azeotropic, preferably is azeotropic.

5. Heat transfer composition, comprising the composition according to either of Claims 1 and 2 and also one or more additives chosen from lubricants, stabilizers, surfactants, tracers, fluorescent agents, odourous agents, solubilization agents and mixtures thereof.

6. Heat transfer system comprising a vapour compression circuit containing a composition according to either of Claims 1 and 2 as a heat transfer fluid or containing a heat transfer composition according to Claim 5.

7. System according to Claim 6, chosen from mobile or stationary systems for heating via a heat pump, for air conditioning, for refrigeration, for freezing and from Rankine cycles, and in particular from motor vehicle air conditioning systems.

8. Process for heating or cooling a fluid or a body by means of a vapour compression circuit containing a heat transfer fluid, said process successively comprising the evaporation of the heat transfer fluid, the compression of the heat transfer fluid, the condensation of the heat fluid and the expansion of the heat transfer fluid, in which the heat transfer fluid is a composition according to either of Claims 1 and 2.

9. Process according to Claim 8, which is a process for cooling a fluid or a body, in which the temperature of the fluid or of the body cooled is from -15°C to 15°C, and preferably from -10°C to 10°C, more particularly preferably from -5°C to 5°C; or which is a process for heating a fluid or a body, in which the temperature of the fluid or of the body heated is from 30°C to 90°C, preferably from 35°C to 60°C and more particularly preferably from 40°C to 50°C.

10. Process according to Claim 8, which is a process for cooling a fluid or a body, in which the temperature of the fluid or of the body cooled is from -40°C to -10°C, preferably from -35°C to -25°C and more particularly preferably from -30°C to -20°C.

11. Process according to Claim 8, which is a process for heating a fluid or a body, in which the temperature of the fluid or of the body heated is greater than 90°C, preferably greater than or equal to 100°C or greater than or equal to 110°C and preferably less than or equal to 120°C.

12. Process for reducing the environmental impact of a heat transfer system comprising a vapour compression circuit containing an initial heat transfer fluid, said process comprising a step of replacing the initial heat transfer fluid in the vapour compression circuit with a final transfer fluid, the final transfer fluid having a GWP lower than the initial heat transfer fluid, in which the final heat transfer fluid is a composition according to either of Claims 1 and 2.

13. Use of the composition according to either of Claims 1 and 2, as a solvent.

14. Use of the composition according to either of Claims 1 and 2, as a blowing agent.

15. Use of the composition according to either of Claims 1 and 2, as a propellant, preferably for an aerosol.

16. Use of the composition according to either of Claims 1 and 2, as a cleaning agent.

**Fig. 1**

## RÉFÉRENCES CITÉES DANS LA DESCRIPTION

**Documents brevets cités dans la description**

- WO 2007126414 A
- WO 2008009928 A
- WO 2008009922 A
- US 20060243945 A